(19) **Europäisches Patentamt**
**European Patent Office**
**Office européen des brevets**

(11) **EP 4 372 687 B1**

(12) **EUROPEAN PATENT SPECIFICATION**

(45) Date of publication and mention
of the grant of the patent:
**10.12.2025 Bulletin 2025/50**

(21) Application number: **22208383.4**

(22) Date of filing: **18.11.2022**

(51) International Patent Classification (IPC):
***G06T 7/70*** *(2017.01)*     ***G06V 10/82*** *(2022.01)*
***G06V 10/774*** *(2022.01)*

(52) Cooperative Patent Classification (CPC):
**G06T 7/70; G06V 10/774; G06V 10/82;**
G06T 2207/10024; G06T 2207/10028;
G06T 2207/20036; G06T 2207/20081;
G06T 2207/20084; G06T 2207/20132

(54) **TRAINING METHOD FOR OBJECT POSE ESTIMATION**

TRAININGSVERFAHREN ZUR SCHÄTZUNG DER OBJEKTPOSE

PROCÉDÉ D'APPRENTISSAGE POUR ESTIMATION DE POSE D'OBJET

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**22.05.2024 Bulletin 2024/21**

(73) Proprietor: **TOYOTA JIDOSHA KABUSHIKI
KAISHA
Aichi-Ken 471-8571 (JP)**

(72) Inventors:
• **GARATTONI, Lorenzo
1140 BRUSSELS (BE)**
• **MEIER, Sven
1140 BRUSSELS (BE)**
• **WANG, Pengyuan
80333 MÜNCHEN (DE)**

• **BUSAM, Benjamin
80333 MÜNCHEN (DE)**

(74) Representative: **Cabinet Beau de Loménie
103, rue de Grenelle
75340 Paris Cedex 07 (FR)**

(56) References cited:
**US-A1- 2022 044 441**

• **XIANG YU ET AL: "PoseCNN: A Convolutional
Neural Network for 6D Object Pose Estimation in
Cluttered Scenes", 26 June 2018 (2018-06-26),
XP093039514, ISBN: 978-0-9923747-4-7,
Retrieved from the Internet <URL:https://yuxng.
github.io/Papers/2018/xiang_rss18.pdf> DOI:
10.15607/RSS.2018.XIV.019**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the invention

The present disclosure relates to the field of computer vision and machine learning, and more particularly to a computer-implemented training method for a machine learning model configured to estimate object pose in an image. The method may find applications in all kinds of industries, including the automotive industry and robotic applications. For instance, the method may be used to train a machine learning model to understand a vehicle's environment in order to adequately control it, or to monitor and support human activities in places such as a factory.

2. Description of Related Art

Estimating object poses from images is a crucial and challenging task for many industries and applications. Machine learning models have shown great potential in this type of task, however several obstacles remain. First, training of the machine learning models generally relies heavily on ground truth poses, which are expensive to annotate in real environments. Second, the images may include artifacts which are caused by photometrically-challenging objects, such as reflective objects, and which disturb the training of the models. US 2022/044441 discloses a system for pose detection and measurement, using a supervised training method based on synthetized training data. Yu Xiang et al, "PoseCNN: A convolutional neural network for 6D object pose estimation in cluttered scenes", Robotics: science and systems XIV, 26 June 2018, DOI: 10.15607/RSS.2018.XIV.019; ISBN: 978-0-9923747-4-7, discloses a model configured to estimate the 3D translation of an object by localizing its center in the image and predicting its distance from the camera.

SUMMARY

The object of the present invention is to at least substantially remedy the above-mentioned drawbacks.

This object is achieved by a computer-implemented self-supervised training method for a machine learning model configured to estimate object pose in an image, the computer-implemented training method comprising:

- obtaining at least one image of an object taken from a viewpoint, distance information between the object and the viewpoint and polarization information of the object, and,
  for each of the at least one image:
- predicting a pose of the object by the machine learning model based on said image, and
- updating the machine learning model based on the predicted pose, the distance information and the polarization information.

A machine learning model, also referred to as "ML model" or merely "model", may comprise one or more mathematical expressions configured to process the image in order to output information representative of the pose of at least one object in the image. Weights of the ML model may be iteratively updated by the training method. The ML model may comprise an artificial neural network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the training of the ANN. In principle, training comprises providing the ANN with a set of situations in which inputs and outputs are known. During the training process, the ANN adapts its synaptic weights and biases to conform to the learned situations, possibly with some tolerance. The weights and biases, once determined at the end of the training phase, may then remain constant or not during the exploitation phase. Typically, the training process may be carried out at least prior to, and possibly simultaneously with, the use of the machine learning model.

The machine learning model may be configured to detect objects in the image, thus generally in two dimensions (2D), and estimate the pose of the detected objects, thus generally in three dimensions (3D). The estimated pose may be a 9D pose, including three spatial dimensions for each of position, rotation and scale (size). The image itself may be an RGB image (red/green/blue), including black and white or greyscale.

The obtaining at least one image may comprise acquiring an image and/or information representative thereof, e.g. through an image acquisition module such as a camera, or getting an already acquired or generated image from a database, e.g. a local or distant server or the like. Hereinafter, unless otherwise stated, "the image" refers to the at least one image. More generally, hereinafter, the article "the" may refer to "the at least one".

The viewpoint may be the location of the camera.

The distance information is a distance between the object and the viewpoint. Distance information may be acquired by means known per se in the art, e.g. a depth camera. Besides, the polarization information comprises information about the polarization of light which is reflected to the camera. For instance, the polarization information may be acquired by a camera with a polarization filter between the object and a camera. As an example, the polarization information may comprise one or more polarized images, e.g. acquired with different polarization filters.

A pose is predicted for each image: this implies that the machine learning model is configured to estimate object pose based on a single image, as opposed to other models which require stereo images. In addition, the machine learning model may not take the distance information and the polarization information as inputs to predict the pose.

In particular, the training method is a self-supervised training method. Self-supervised learning is a type of training in which a model learns from unlabeled data. Here, specifically, the training method leverages the distance information and the polarization information to correct and update the pose initially predicted by the machine learning model. In other words, the distance information and the polarization information work as pseudo-labels for the predicted pose. Ultimately, this enables the model to better estimate object poses from an image, even for photometrically-challenging objects about which polarization and distance information bring reliable information. Therefore, the proposed training method enhances performance of object pose estimation for any machine learning model, without needing costly annotations.

Optionally, the training method further comprises, for each of the at least one image, deriving distance properties and polarization properties from the predicted pose, and the updating comprises minimizing a loss reflecting a difference between the derived distance properties and the obtained distance information, and a difference between the derived polarization properties and the obtained polarization information. Once a pose of the object has been predicted, other properties of the object can be derived from that pose, such as distance properties and polarization properties. The distance properties and polarization properties may respectively correspond to the distance information and polarization information in terms of type of data, but the distance and polarization properties are derived from the predicted pose whereas the distance and polarization information are obtained from the actual object.

In these embodiments, the updating may comprise updating the weights of the machine learning model so that the predicted pose would evolve towards minimizing a difference between the derived properties and the obtained information. In other words, the (self-supervised) learning penalizes deviation between the distance and polarization information obtained from the actual object and the distance and polarization properties derived from the predicted pose of the object.

Optionally, the deriving is carried out through a renderer. A renderer, or rendering engine, is known per se in the art of computer graphics. For instance, the renderer may produce an image (e.g. 2D or 3D) from the predicted pose, image based on which the distance properties and polarization properties are then derived.

Optionally, the loss comprises at least one of a polarization mask loss, a surface normal loss and a distance loss. A polarization mask loss is a loss that takes into account a polarization mask. A mask may be a filter configured to mask some parts of the image (e.g. some pixels) while leaving others visible. Specifically, a polarization mask for an object may be configured to leave the object visible and mask everything else, including the background and other objects, based on polarization data obtained from the object. The background may be defined as everything which is not an object. The polarization mask loss may represent a difference between a polarization mask obtained from the actual object and a polarization mask derived from the predicted pose.

A surface normal loss is a loss that takes into account a vector field normal to a surface of the object. A vector field normal to a surface of the object includes a plurality of vectors which are orthogonal to the surface of the objects, at different points of the object. Such a vector is also known as a surface normal. The polarization mask loss may represent a difference between surface normals obtained from the actual object and surface normals derived from the predicted pose, e.g. the angle between the two surface normals at one or more given points of the object.

A distance loss is a loss that takes into account a distance between the viewpoint and the object. The distance loss may represent a difference between the distance information obtained from the actual object and the distance properties derived from the predicted pose.

The polarization mask loss, the surface normal loss and the distance loss may be combined in the loss, e.g. through linear combination.

Optionally, the predicting comprises detecting an object on the image by the machine learning model, and keeping or discarding the detection based on at least one of the distance information and the polarization information. In these embodiments, predicting a pose of an object includes detecting the object. However, false detections may occur. In these embodiments, false detections are discarded and no pose is predicted for them. On the other hand, based on at least one of the distance information and the polarization information, a detection can be determined as being a good detection, based on which a pose is then predicted. Therefore, these embodiments further use self-supervision, with at least one of the distance information and the polarization information serving as pseudo-ground truth, in order to make the machine learning model more robust.

Optionally, at least one of the polarization information and the polarization properties comprises a polarization mask and/or a vector field normal to a surface of the object.

Optionally, the polarization information comprises polarization data for a plurality of polarization angles. Therefore, the polarization information is more complete and may adapt to any polarization angle of the light returned by the object.

Optionally, the obtaining the polarization information comprises obtaining an angle of linear polarization and/or a degree of linear polarization. The angle of linear polarization is the angle of polarization of the light reflected from the object to the viewpoint. The degree of linear polarization is calculated as

$$\rho = \frac{I_{max} - I_{min}}{I_{max} + I_{min}}$$

where $I_{max}$ and $I_{min}$ are the maximum and minimum values of the intensity of light reflected at a given point of the object for different polarization angles.

Likewise, the derived polarization properties may comprise an angle of linear polarization and/or a degree of linear polarization.

Optionally, the machine learning model is configured to estimate category-level object pose in an image. Category-level object pose estimation means that, as opposed to instance-level object pose estimation, no predefined shape for the object can be stored. Hence, the machine learning model must adapt to the specific shape of every instance. The proposed training method adapts well to category-level object pose estimation.

Optionally, the training method further comprises pre-processing the distance information based on the polarization information. This facilitates further treatment of the distance information. For instance, the training method comprises cropping the distance information based on the polarization information. Thus, the amount of data to process is reduced and the relevant distance information to keep can be selected in a reliable manner.

The present disclosure is further related to a computer program including instructions for executing the steps of the above described training method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described training method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a diagram illustrating a flow of data in a training method according to an embodiment;
- Fig. 2 illustrates an example of a polarization mask determination according to an embodiment;
- Fig. 3 shows examples of 2D detections without (a) and with (b) training according to an embodiment.

DETAILED DESCRIPTION OF EMBODIMENTS

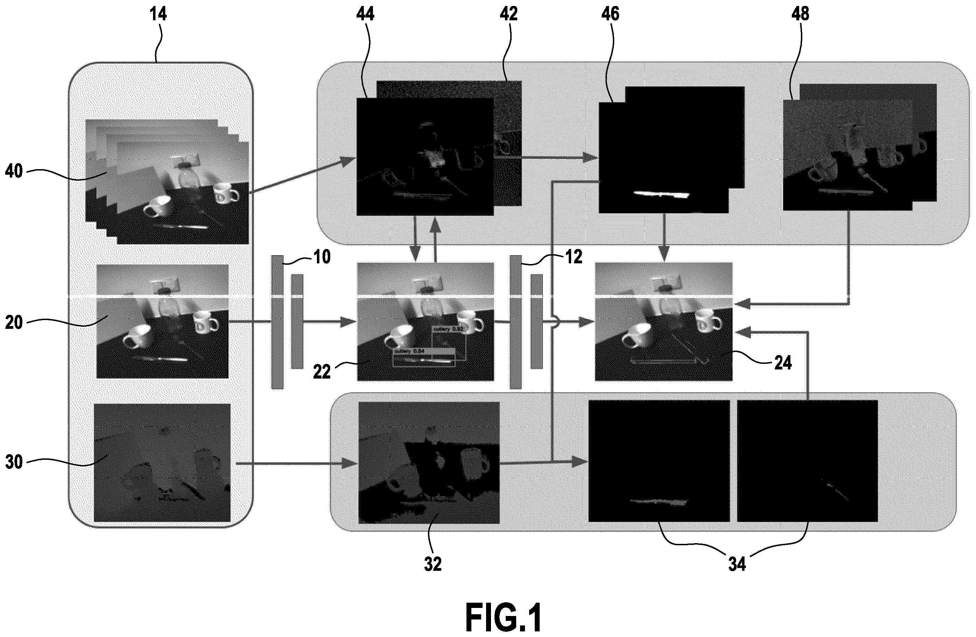

A computer-implemented training method according to an embodiment is described in reference to Figs. 1-3. The training method aims to train a machine learning model configured to estimate object pose in an image. Generally speaking, the training method uses polarization information in order to reveal the material properties of photometrically-challenging objects in the image, e.g. reflective surfaces, which active sensors such as depth cameras fail to highlight. Specifically, the training method relies on the idea of leveraging polarization clues to verify and improve the pose estimate of objects in the image, as the predicted pose and properties derived therefrom should be consistent with the information obtained about other modalities, in particular distance and polarization.

In the present embodiment, the machine learning model takes an RGB image (hereinafter merely referred to as "image") as an input, and outputs the pose of at least one object in the image. For the sake of conciseness, the following description explains the case of one object, but the principles described herein apply to more objects. In particular, the model may be configured to estimate category-level object pose in an image.

In this embodiment, the machine learning model works in two steps, namely detecting an object in the image and predicting a pose of the detected object. The machine learning model may comprise a first model 10 configured to detect objects in an image, and a second model 12 configured to predict a pose of detected objects. Such models are known per se in the art and are not described further herein.

As an example of the first model 10, Yolo-X (Zheng Ge, Songtao Liu, Feng Wang, Zeming Li, and Jian Sun. Yolo-X: Exceeding yolo series in 2021. arXiv preprint arXiv:2107.08430, 2021.) may be used. Yolo-X detects objects in the image and outputs the 2D bounding box of the detected objects. However, other models may be used, e.g. networks such as Mask R-CNN (Kaiming He et al. Mask R-CNN. arXiv:1703.06870), RetinaNet (Tsung-Yi Lin et al. Focal Loss for Dense Object Detection. arXiv:1708.02002), etc.

As an example of the second model 12, CPS++ (Fabian Manhardt, GuWang, Benjamin Busam, Manuel Nickel, Sven Meier, Luca Minciullo, Xiangyang Ji, and Nassir Navab. Cps++: Improving class-level 6D pose and shape estimation from monocular images with self-supervised learning. arXiv preprint arXiv:2003.05848, 2020.) may be used. CPS++ estimates the normalized object point cloud as well as the scales, rotation and translations of the objects (i.e. the 9D pose) from the 2D features, which features may be extracted from the 2D detections by Yolo-X.

That is, the machine learning model is configured to predict an object pose with only an RGB image as an input, which simplifies the deployment and scalability. However, the training method further relies on corresponding distance information and polarization information.

With reference to Fig. 1, the training method comprises obtaining at least one image 20 of an object taken from a viewpoint, distance information 30 between the object and the viewpoint, and polarization information 40 of the object. The image 20, the distance information 30 and the polarization information 40 form together one training input 14 of the training method. The machine learning model may be trained on a plurality of such training inputs 14.

In this embodiment, the image 20 is a conventional RGB image, e.g. taken with a camera. Alternatively, the image 20 could be computer-generated.

In this embodiment, the distance information 30 is a depth image, which may be obtained by a depth sensor or camera. For instance, in order to obtain the image 20 and the distance information 30 together, a single RGB-D camera (where D stands for depth) may be used. The depth image provides information about a distance between the viewpoint and the object. However, instead of a depth image, other types of distance information may be given.

In this embodiment, the polarization information 40 comprises polarization data for a plurality of polarization angles, shown in Fig. 1 as a plurality of polarization images, each obtained for a different polarization angle. Polarization cameras providing such images are known per se in the art.

For each image 20, the training method comprises predicting a pose of the object by the machine learning model based on said image 20. As outlined before, this is carried out in two steps in the present embodiment, but could be performed differently. Specifically, in this embodiment, the machine learning model first detects objects (here, cutlery) in the image through the first model 10, thus returning object detections 22, and then predicts a pose of the detected objects, through the second model 12, thus returning a predicted pose 24. As shown in Fig. 1 and discussed above, the detection may be carried out in two dimensions and may return a bounding box of the object.

As regards the other modalities, namely distance and polarization, though the light signal sent from the depth sensor cannot be reflected back and measured by the receiver on metallic surfaces, the change of the polarization state of the environment light is captured by the polarization camera. The environment light is unpolarized and becomes partially polarized by the specular reflection on the object surface, which results in higher value of degree of linear polarization than the surrounding environment.

Based on these considerations, the training method may use, as polarization information, an angle of linear polarization 42 (AOLP) and/or a degree of linear polarization 44 (DOLP), e.g. calculated for each pixel of the image 20.

The polarization information 40 comprises four different images having respective RGB intensities $I_0, I_1, I_2, I_3$ for respective polarization angles $\Phi$ of e.g. 0, 45, 90, 135 degrees. The RGB intensity of the image 20 is calculated as

$$I_{rgb} = \frac{1}{4} \cdot (I_0 + I_1 + I_2 + I_3) \qquad (1)$$

The intensity of a polarization image is defined as

$$I(\Phi) = \frac{I_{max} + I_{min}}{2} + \frac{I_{max} - I_{min}}{2} \cdot \cos{(2\Phi - 2\phi)} \qquad (2)$$

where $I_{max}$ and $I_{min}$ are the maximum and minimum values among $I_0, I_1, I_2, I_3$, and $\phi$ is the AOLP. Eq. (2) enables to derive

the AOLP $\phi$ from the measured intensities in a plurality of images polarized at different polarization angles. The degree of linear polarization $\rho$ may be calculated as

$$\rho = \frac{I_{max} - I_{min}}{I_{max} + I_{min}} \qquad (3)$$

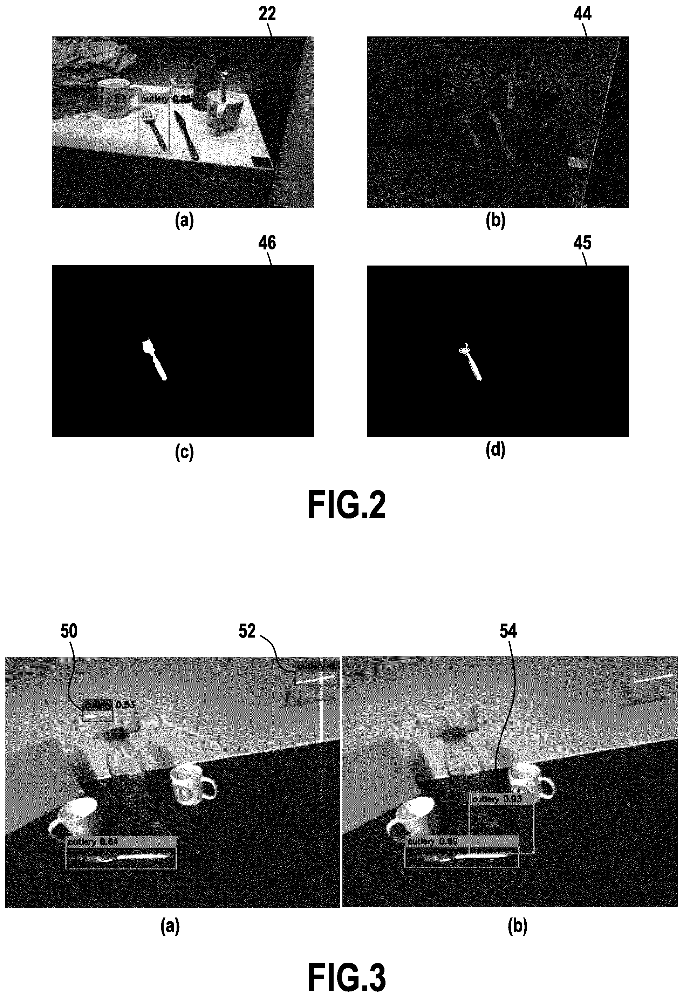

The polarization information may comprise a polarization mask 46. For instance, the DOLP 44 may be used to determine the polarization mask 46. Specifically, determination of a polarization mask 46 may be carried out as exemplified in Fig. 2. Fig. 2(a) shows an object detection 22, e.g. an image with a fork detected therein and identified as cutlery (category-level label). The DOLP 44 of the object detection is then calculated as per Eq. (3), based on the polarization information 40, and is illustrated in Fig. 2(b). Then, a polarization pre-mask 45 shown in Fig. 2(d) may be determined as the pixels for which the DOLP is greater than a threshold. The polarization pre-mask 45 may be determined for the object detection, e.g. within the bounding box only.

It is observed that the cutlery contains thin structures, which are neglected when searching for the largest connected component within the bounding box. Therefore morphological operations, which include, for instance, dilation followed by erosion with a kernel of 5x5, may be performed on the polarization pre-mask 45. Such operations are, per, se, known in the art. The connected components are then extracted within the bounding box and the one with largest area is assumed to be the polarization mask 46 of the object, shown in Fig. 2(c).

The training method may comprise keeping or discarding the detection 22 based on at least one of the distance information and the polarization information. The following description describes the example in which a cutlery detection is checked based on polarization information, e.g. the polarization mask 46.

Based on the assumption that the object should exist and be inside the bounding box, several criteria are set to determine whether the predictions are good or not. Firstly the detections with polarization mask area smaller than a threshold, which may be set as fifty pixels, are considered as false positives and discarded. Such areas, such as area 50 in Fig. 3(a), look bright but actually contain objects with diffuse reflections. Secondly, the minimum and maximum of the x,y coordinates are calculated from the extracted mask, which should be inside the bounding box and not reaching the boundary of the bounding box, in order to deal with cases in which the predicted bounding box is smaller than the ground truth. With this step, bounding boxes in which objects are partially contained are avoided. After the discarding of unfitted bounding boxes, the remaining object bounding boxes (or more generally object detections) are kept, i.e. used as self-supervision signal for the fine-tuning of the machine learning model. Fig. 3(b) shows detections after self-supervision, where objects are correctly identified: the false positive areas 50, 52 are not identified as cutlery anymore, whereas the fork in area 54, which was a missing detection in Fig. 3(a), has now been correctly detected: the correct detections of the fork in area 54 were strengthened by the above-described refinements.

Back to Fig. 1, a polarization mask 46 can be obtained for each object detection.

In addition or as an alternative to the polarization mask 46, the polarization information may comprise a vector field normal to a surface of the object. For each pixel of the image 20, a vector normal to the surface of the object at that pixel, or surface normal, is denoted n and may be determined from the AOLP 42 and the DOLP 44, e.g. as follows. As only the direction of the surface normal matters, the vector n can be chosen unitary and is thus defined by two angles, namely a zenith angle $\theta$ and an azimuth angle $\psi$.

The degree of linear polarization $\rho$ can be expressed based on the zenith angle $\theta$ for diffuse surfaces in Eq. (4) and specular surfaces in Eq. (5), where n is the refractive index of the material, which may be set as 1.5 for cutlery.

$$\rho = \frac{(n - \frac{1}{n})^2 \sin^2 \theta}{2 + 2n^2 - (n + \frac{1}{n})^2 \sin^2 \theta + 4 \cos \theta \sqrt{n^2 - \sin^2 \theta}} \qquad (4)$$

$$\rho = \frac{2 \cos \theta \sin^2 \theta \sqrt{(n^2 - \sin^2 \theta)}}{\cos^2 \theta (n^2 - \sin^2 \theta) + \sin^4 \theta} \qquad (5)$$

From these equations, it is possible to derive the zenith angle $\theta$ based on the DOLP. The zenith angle $\theta$ takes two possible values in Eq. (5) and there are also two possible values for the azimuth angle $\psi = \phi \pm \frac{\pi}{2}$, because of $\pi$-ambiguity.

Although two values $\theta_1$ and $\theta_2$ for the zenith angle can be derived from the DOLP, only the zenith angle with a lower value is considered, because the range of the higher value is close to 90 degrees for specular surfaces and less probable in practice. Afterwards, the two possible surface normals n are recovered by two possible azimuth angles and the zenith angle with lower value in Eq. (6).

$$n = \begin{bmatrix} cos\psi \cdot \sin\ \theta \\ sin\psi \cdot \sin\ \theta \\ cos\theta \end{bmatrix} \tag{6}$$

The surface normals can be obtained for each pixel, resulting in a vector field 48 normal to a surface of the object. In Fig. 1, two images are shown for the vector field 48.

Besides, the distance information 30 may be pre-processed, e.g. based on the polarization information. In the present embodiment, artifact removal may be carried out, this resulting in artifact-free distance information 32, in a manner known per se in the art.

Then, but independently, the distance information 30 (or as applicable, the artifact-free distance information 32) may be cropped based on the polarization information 40. For example, the polarization mask 46 may be applied to the artifact-free distance information 32, for each object, in order to keep only the regions of interest. The resulting cropped distance information is denoted by reference 34 in Fig. 1.

As mentioned before, the training method comprises, for each image 20, updating the machine learning model based on the predicted pose 24, the distance information 30 and the polarization information 40. Specifically, distance properties and polarization properties may be derived from the predicted pose 24, and these properties are compared to the distance information 30, e.g. the cropped distance information 34, and the polarization information 40, e.g. the polarization mask 46 and the vector field (surface normals) 48.

For them to be comparable, the distance properties should have the same structure or contain the same type of data as the distance information to which it is compared. The same applies to the polarization properties and the polarization information. Therefore, the features discussed herein about the distance or polarization information apply mutatis mutandis for the distance or polarization properties.

The deriving may be carried out through a renderer. For instance, the objects, the pose of which has been predicted, may be rendered with a differentiable renderer module to obtain the object masks and depth image, the depth image being then transformed into surface normals with Kornia (Edgar Riba, Dmytro Mishkin, Daniel Ponsa, Ethan Rublee, and Gary Bradski. Kornia: an open source differentiable computer vision library for Pytorch. In Proceedings of the IEEE/CVF Winter Conference on Applications of Computer Vision, pages 3674-3683, 2020.) Note that although the surface normals can be obtained based on said depth image in the case of the distance properties, because the depth image does, by construction, correctly reflect the geometry of the predicted pose 24, it is preferable to derive the surface normals from the polarization information 40 in the case of the actual object, because the distance information 30 is not reliable enough in this respect, as explained above.

Thus, the surface normals may be seen both as a distance-relating characteristic (information or property) and as a polarization-related characteristic.

Then, the updating comprises minimizing a loss reflecting a difference between the derived distance properties and the obtained distance information, and between the derived polarization properties and the obtained polarization information. The loss may comprise at least one of a polarization mask loss $\mathcal{L}_{pol}^{mask}$, a surface normal loss $\mathcal{L}_{pol}^{normal}$ and a distance loss $\mathcal{L}_{pol}^{geo}$, also known as a geometrical loss. In the present embodiment, the loss comprises a linear combination of all three losses, e.g. as per Eq. (7):

$$\mathcal{L}_{all} = \mathcal{L}_{pol}^{mask} + \mathcal{L}_{pol}^{normal} + \mathcal{L}_{pol}^{geo} \tag{7}$$

Although given the same weights in Eq. (7), the respective weights of the polarization mask loss $\mathcal{L}_{pol}^{mask}$, the surface normal loss $\mathcal{L}_{pol}^{normal}$ and the distance loss $\mathcal{L}_{pol}^{geo}$ could vary. In particular, the surface normal loss may not be used (i.e. have a weight of zero).

Polarization mask loss - As described above, the polarization pre-mask 45 extracted from image bounding boxes 22 and degree of linear polarization 44 may undergo morphological operations and extraction of the largest connected component, after which the polarization mask 46 is recorded as $M_{pol}$. The loss term $\mathcal{L}_{pol}^{mask}$ is formulated by comparing the object mask $M_{render}$ derived from the rendering and the polarization mask $M_{pol}$ with focal loss, to deal with the imbalance of the positive samples $N_+$ (i.e. pixels belonging to the mask) and negative samples $N_-$ (i.e. pixels not belonging to the mask), as shown e.g. in Eq. (8). Using polarization image for mask loss leverages the unique material property of metallic (reflective) objects and segments the object out even under noisy color information, which is challenging for monocular images.

$$\mathcal{L}_{pol}^{mask} = -\frac{1}{|N_+|} \sum_{j \in N_+} M_j^{pol} \log M_j^{render} - \frac{1}{|N_-|} \sum_{j \in N_-} (1 - M_j^{pol}) \log M_j^{render} \qquad (8)$$

Surface normal loss - In this embodiment, the differentiable rendering module provides rendered depth images. To convert the depth image to normal map, the depth image are reprojected to 3D space and the spatial gradients are calculated. The normal map $\hat{N}_r$ is calculated by cross product of the two gradients. Given the two possible normal directions for specular surfaces $\hat{N}_{\theta_1}$, $\hat{N}_{\theta_2}$, D is the intersection of the predicted mask (i.e. the object mask derived from the predicted pose) and the polarization mask 46, and the surface normal loss $\mathcal{L}_{pol}^{normal}$ is defined in Eq. (9), where $j$ is a pixel of $D$. The log function is used to reduce the influence of the possible normal outliers.

$$\mathcal{L}_{pol}^{normal} = \frac{1}{N_j} \sum_{j \in D} \min \left( \log \left( 1 + \arccos \left( \hat{N}_{j,r} \cdot \hat{N}_{j,\theta_1} \right) \right); \log \left( 1 + \arccos \left( \hat{N}_{j,r} \cdot \hat{N}_{j,\theta_2} \right) \right) \right) \qquad (9)$$

Distance loss - The distance loss may reflect the difference between the distance information 30 and distance properties derived from the predicted pose 24, e.g. with an L1 loss or the like. If desired, the distance information may be preliminarily filtered in order to remove artifacts: parts of the depth images (or more generally the distance information) have larger distance values than the ground truth, because the light signal from the depth camera is reflected to other nearby objects and reflected back to the receiver, which measures a longer flight time of the light and results in larger distance values. Therefore, plane assumptions are made for the environment and the distance values which are physically impossible may be regarded as artifacts in the distance information 30 and removed.

The proposed training method achieves great improvement in terms of the machine learning model's ability to correctly estimate object poses in images. The polarization information serves mainly as guidance for the object shape and orientation, while the distance information serves mainly as guidance for the object scale.

In order to evaluate the training method, the following training settings may be used. The training may be carried out in two steps. Firstly, the Yolo-X model is trained on a synthetic dataset and fine-tuned on real scenes. Secondly, the 3D lifting module (here CPS++) is trained to estimate the 9D bounding box with ground truth synthetic data, and then refined with the proposed self-supervision losses for real scenes. The polarization mask loss, the surface normal loss and the distance loss may be weighted, e.g. respectively with factors of 50, 50, 1000. The self-supervision network is trained for 15000 iterations with a SGD optimizer and a base learning rate of 1e-5.

First, the 2D detection results are evaluated with and without self-supervision. The results of the average precision (AP) and recall, along with F1 scores, are recorded in Table 1. The result shows that through the self-supervision with polarization images, both the average accuracy and recall become higher. Especially for $AP_{50}$ and $Recall_{50}$, the results are improved greatly, which makes the self-supervision signal in the next stage more accurate. Qualitative results are shown in Fig. 3 and were discussed above.

[Table 1]

|  | $AP_{50}$ | $Recall_{50}$ | AP | Recall | F1 |
|---|---|---|---|---|---|
| w/o self-supervision | 60.47 | 63.75 | 36.28 | 38.75 | 37.47 |
| with self-supervision | **100** | **100** | **45.89** | **45.89** | **45.89** |

Since no prior work has been done focusing on the self-supervision of photometrically challenging categories, the present training method is compared with CPS++, which performs domain adaptation for categories with diffuse reflections. The results listed in Table 2 show that the present training method outperforms CPS++ by 42.5% for 3D IoU (intersection over union) at a threshold of 0.25 and by 30% for 3D IoU at a threshold of 0.5. The overall performance improvements come from cross-model learning from polarization and distance inputs, where the accurate object mask and normal priors from polarization images help to reconstruct missing distance pixels.

[Table 2]

| $3D_{25}/3D_{50}$ | $3D_{25}$ | $3D_{50}$ |
|---|---|---|
| CPS++ | 42.5 | 0 |
| Present training method | **88.75** | **30** |

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented self-supervised training method for a machine learning model configured to estimate object pose in an image (20), the computer-implemented training method comprising:

   - obtaining at least one image (20) of an object taken from a viewpoint, distance information (30) between the object and the viewpoint and polarization information (40) of the object, and,

   for each of the at least one image:

   - predicting a pose (24) of the object by the machine learning model based on said image (20), and
   - updating the machine learning model based on the predicted pose (24), the distance information (30) and the polarization information (40).

2. The training method of claim 1, further comprising, for each of the at least one image (20), deriving distance properties and polarization properties from the predicted pose (24), and the updating comprises minimizing a loss reflecting a difference between the derived distance properties and the obtained distance information (30), and a difference between the derived polarization properties and the obtained polarization information (40).

3. The training method of claim 2, wherein the deriving is carried out through a renderer.

4. The training method of claim 2 or 3, wherein the loss comprises at least one of a polarization mask loss, a surface normal loss and a distance loss.

5. The training method of any one of claims 1 to 4, wherein the predicting comprises detecting an object on the image by the machine learning model, and keeping or discarding the detection (22) based on at least one of the distance information (30) and the polarization information (40).

6. The training method of any one of claims 1 to 5, wherein at least one of the polarization information (40) and the polarization properties comprises a polarization mask (46) and/or a vector field (48) normal to a surface of the object.

7. The training method of any one of claims 1 to 6, wherein the polarization information (40) comprises polarization data for a plurality of polarization angles.

8. The training method of any one of claims 1 to 7, wherein the obtaining the polarization information comprises obtaining an angle of linear polarization (42) and/or a degree of linear polarization (44).

9. The training method of any one of claims 1 to 8, wherein the machine learning model is configured to estimate category-level object pose in an image (20).

10. The training method of any one of claims 1 to 9, further comprising pre-processing the distance information (30) based on the polarization information (40), optionally cropping the distance information (30) based on the polarization information (40).

11. A computer program including instructions for executing the steps of the training method of any one of claims 1 to 10 when said program is executed by a computer.

12. A recording medium readable by a computer and having recorded thereon a computer program including instructions for executing the steps of the training method of any one of claims 1 to 10.

**Patentansprüche**

1. Rechnerimplementiertes, selbstüberwachtes Trainingsverfahren für ein Modell maschinellen Lernens, das konfiguriert ist, um eine Objektlage in einem Bild (20) zu schätzen, das computerimplementierte Trainingsverfahren umfassend:

   - Erlangen von mindestens einem Bild (20) eines Objekts, das von einem Blickpunkt aus aufgenommen wird, Entfernungsinformationen (30) zwischen dem Objekt und dem Blickpunkt und Polarisationsinformationen (40) des Objekts, und,

   für jedes von dem mindestens einen Bild:

   - Vorhersagen einer Lage (24) des Objekts durch das Modell maschinellen Lernens basierend auf dem Bild (20), und
   - Aktualisieren des Modell maschinellen Lernens basierend auf der vorhergesagten Lage (24), den Entfernungsinformationen (30) und den Polarisationsinformationen (40).

2. Trainingsverfahren nach Anspruch 1, ferner umfassend, für jedes des mindestens einen Bilds (20), ein Ableiten von Entfernungseigenschaften und Polarisationseigenschaften aus der vorhergesagten Lage (24), und wobei das Aktualisieren ein Minimieren eines Verlusts umfasst, der eine Differenz zwischen den abgeleiteten Entfernungseigenschaften und den erlangten Entfernungsinformation (30) und eine Differenz zwischen den abgeleiteten Polarisationseigenschaften und den erlangten Polarisationsinformation (40) widerspiegelt.

3. Trainingsverfahren nach Anspruch 2, wobei das Ableiten durch einen Renderer durchgeführt wird.

4. Trainingsverfahren nach Anspruch 2 oder 3, wobei der Verlust mindestens eines von einem Polarisationsmaskenverlust, einem Oberflächennormalenverlust und einem Entfernungsverlust umfasst.

5. Trainingsverfahren nach einem der Ansprüche 1 bis 4, wobei das Vorhersagen ein Erkennen eines Objekts auf dem Bild durch das Modell maschinellen Lernens und ein Beibehalten oder Verwerfen der Erkennung (22) basierend auf mindestens einem von den Entfernungsinformationen (30) und den Polarisationsinformationen (40) umfasst.

6. Trainingsverfahren nach einem der Ansprüche 1 bis 5, wobei mindestens eines von den Polarisationsinformationen (40) und den Polarisationseigenschaften eine Polarisationsmaske (46) und/oder ein Vektorfeld (48) senkrecht zu einer Oberfläche des Objekts umfasst.

7. Trainingsverfahren nach einem der Ansprüche 1 bis 6, wobei die Polarisationsinformationen (40) Polarisationsdaten für eine Vielzahl von Polarisationswinkeln umfassen.

8. Trainingsverfahren nach einem der Ansprüche 1 bis 7, wobei das Erlangen der Polarisationsinformationen ein Erlangen eines Winkels linearer Polarisation (42) und/oder eines Grads linearer Polarisation (44) umfasst.

9. Trainingsverfahren nach einem der Ansprüche 1 bis 8, wobei das Modell maschinellen Lernens konfiguriert ist, um eine Objektlage auf Kategorieebene in einem Bild (20) zu schätzen.

10. Trainingsverfahren nach einem der Ansprüche 1 bis 9, ferner umfassend ein Vorverarbeiten der Entfernungsinformationen (30) basierend auf den Polarisationsinformationen (40), optional ein Beschneiden der Entfernungsinformationen (30) basierend auf den Polarisationsinformationen (40).

11. Rechnerprogramm, das Anweisungen zum Ausführen der Schritte des Trainingsverfahrens nach einem der Ansprüche 1 bis 10 beinhaltet, wenn das Programm von einem Rechner ausgeführt wird.

**12.** Aufzeichnungsmedium, das von einem Rechner lesbar ist und auf dem ein Rechnerprogramm aufgezeichnet ist, das Anweisungen zum Ausführen der Schritte des Trainingsverfahrens nach einem der Ansprüche 1 bis 10 beinhaltet.

**Revendications**

**1.** Procédé d'entraînement auto-supervisé mis en œuvre par ordinateur pour un modèle d'apprentissage par machine configuré pour estimer la pose d'un objet dans une image (20), le procédé d'entraînement mis en œuvre par ordinateur comprenant :

- l'obtention d'au moins une image (20) d'un objet prise depuis un point de vue, d'une information de distance (30) entre l'objet et le point de vue et d'une information de polarisation (40) de l'objet, et,

pour chacune de l'au moins une image :

- la prédiction d'une pose (24) de l'objet par le modèle d'apprentissage par machine sur la base de ladite image (20), et
- la mise à jour du modèle d'apprentissage par machine sur la base de la pose prédite (24), de l'information de distance (30) et de l'information de polarisation (40).

**2.** Procédé d'entraînement selon la revendication 1, comprenant en outre, pour chacune de l'au moins une image (20), le fait de déduire des propriétés de distance et des propriétés de polarisation de la pose prédite (24), et la mise à jour comprend le fait de minimiser une perte reflétant une différence entre les propriétés de distance déduites et l'information de distance obtenue (30), et une différence entre les propriétés de polarisation déduites et l'information de polarisation obtenue (40).

**3.** Procédé d'entraînement selon la revendication 2, selon lequel la déduction est réalisée par l'intermédiaire d'un dispositif de rendu.

**4.** Procédé d'entraînement selon la revendication 2 ou 3, selon lequel la perte comprend au moins une d'une perte de masque de polarisation, d'une perte de normale à la surface et d'une perte de distance.

**5.** Procédé d'entraînement selon l'une quelconque des revendications 1 à 4, selon lequel la prédiction comprend le fait de détecter un objet sur l'image grâce au modèle d'apprentissage par machine, et le maintien ou le rejet de la détection (22) sur la base de au moins une de l'information de distance (30) et de l'information de polarisation (40).

**6.** Procédé d'entraînement selon l'une quelconque des revendications 1 à 5, selon lequel au moins une de l'information de polarisation (40) et des propriétés de polarisation comprend un masque de polarisation (46) et/ou un champ de vecteur (48) normal à une surface de l'objet.

**7.** Procédé d'entraînement selon l'une quelconque des revendications 1 à 6, selon lequel l'information de polarisation (40) comprend des données de polarisation pour une pluralité d'angles de polarisation.

**8.** Procédé d'entraînement selon l'une quelconque des revendications 1 à 7, selon lequel l'obtention de l'information de polarisation comprend le fait d'obtenir un angle de polarisation linéaire (42) et/ou un degré de polarisation linéaire (44).

**9.** Procédé d'entraînement selon l'une quelconque des revendications 1 à 8, selon lequel le modèle d'apprentissage par machine est configuré pour estimer une pose d'objet de niveau de catégorie dans une image (20).

**10.** Procédé d'entraînement selon l'une quelconque des revendications 1 à 9, comprenant en outre un prétraitement de l'information de distance (30) sur la base de l'information de polarisation (40), optionnellement un recadrage de l'information de distance (30) sur la base de l'information de polarisation (40).

**11.** Programme informatique comprenant des instructions pour exécuter les étapes du procédé d'entraînement selon l'une quelconque des revendications 1 à 10 quand ledit programme est exécuté par un ordinateur.

**12.** Support d'enregistrement lisible par un ordinateur et ayant enregistré dessus un programme informatique comprenant des instructions pour exécuter les étapes du procédé d'entraînement selon l'une quelconque des revendications

1 à 10.

FIG.1

**FIG.2**

**FIG.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022044441 A

**Non-patent literature cited in the description**

- **YU XIANG et al.** PoseCNN: A convolutional neural network for 6D object pose estimation in cluttered scenes. *Robotics: science and systems*, 26 June 2018, vol. XIV, ISSN 978-0-9923747-4-7
- **ZHENG GE** ; **SONGTAO LIU** ; **FENG WANG** ; **ZEMING LI** ; **JIAN SUN**. Yolo-X: Exceeding yolo series in 2021. *arXiv preprint arXiv:2107.08430*, 2021
- **KAIMING HE et al.** Mask R-CNN. *arXiv:1703.06870*
- **TSUNG-YI LIN et al.** Focal Loss for Dense Object Detection. *arXiv:1708.02002*

- **FABIAN MANHARDT** ; **GUWANG** ; **BENJAMIN BUSAM** ; **MANUEL NICKEL** ; **SVEN MEIER** ; **LUCA MINCIULLO** ; **XIANGYANG JI** ; **NASSIR NAVAB**. Cps++: Improving class-level 6D pose and shape estimation from monocular images with self-supervised learning. *arXiv preprint arXiv:2003.05848*, 2020
- **EDGAR RIBA** ; **DMYTRO MISHKIN** ; **DANIEL PONSA** ; **ETHAN RUBLEE** ; **GARY BRADSKI**. Kornia: an open source differentiable computer vision library for Pytorch. *Proceedings of the IEEE/CVF Winter Conference on Applications of Computer Vision*, 2020, 3674-3683